# EUROPEAN PATENT SPECIFICATION

(11) **EP 2 027 943 B1**
(45) Date of publication and mention of the grant of the patent: **09.09.2015**
(21) Application number: 07425495.4
(22) Date of filing: 31.07.2007
(51) Int. Cl.: B09B 3/00

(54) **Industrial process for the direct temperature induced transformation and recycling of asbestos containing wastes using a tunnel kiln**
Industrielles Verfahren für die direkte temperaturinduzierte Umsetzung und Wiederverwertung von asbesthaltigen Abfällen unter Verwendung eines Tunnelofens
Procédé industriel de transformation induite à la température directe et de recyclage des déchets contenant de l'amiante utilisant un four tunnel

(43) Date of publication of application: 25.02.2009
(73) Proprietor: Zanatto, Ivano, Ferno (Varese) (IT)
(72) Inventor: Gualtieri, Alessandro Francesco, 41050 Modena (IT); Zanatto, Ivano, 21010 Varese (IT)
(74) Representative: Crugnola, Pietro

(56) References cited:
- EP-A- 0 684 054
- EP-A- 1 277 527
- WO-A-98/02392
- WO-A-2006/047070
- DE-A1- 4 227 024
- NL-C1- 1 000 460
- US-A1- 2003 225 308

## Description

The subject of this invention is an industrial process for the thermal treatment of entire packs of cement asbestos, sealed with plastic material, to obtain a product which is completely transformed as a result of thermally induced crystal-chemical transformation The transformed material is composed of calcium-, aluminium-, magnesium- and iron-silicates which are harmless to life health and can be recycled in industrial manufacturing of various products.

DE 4227024 discloses a process for thermally disposing of refuse which contains asbestos wherein the refuse is filled into sealed containers and placed in a furnace. The sealed containers are consituted by sections of metal pipes. DE 4227024 does not disclose any treatment temperature or treatment times.

EP 1277527 discloses a method for converting asbestos cement products into asbestos-free tempered cement products. The method comprises packing the asbestos cement products, feeding the packaged asbestos cement products into a furnace and heating the asbestos cement products to a temperature of approximately 600 °C to a maximum of 1000 °C.

WO 2006/047070 discloses a method of waste stabilization by mineralization of waste material in situ in a treatment container suitable for treatment, transit, storage and disposal. The waste material may be mixed with mineralizing additives and, optionally, reducing additives, in the treatment container or in a separate mixing vessel. The mixture is then subjected to heat in the treatment container to heat-activate mineralization of the mixture and form a stable, mineralized, monolithic solid. This stabilized mass may then be transported in the same treatment container for storage and disposal.

NL1000460 discloses a method for destroying asbestos fibres by heating the fibres in a furnace at a temperature of 1300-1400 °C, using air and steam heat exchangers and desulphurization systems.

WO9802392 discloses a method for disposing fibre cement waste products, particularly asbestos cement products, in which the fibre cement waste products to be disposed are subjected to a coarse crushing and charged into an entry zone of a revolving kiln with a temperature of at least 800°C and thereafter advanced through zones of higher temperature under formation of a melt and transformed into cement clinker, the latter being finally pulverized to form cement. US2003/0225308 discloses a method for transforming waste products containing or including amiantus, in which the waste products are ground to be reduced to a dimension no greater than 0.063 millimetres and additives selected from a group comprising calcined alumina, clay and materials having a given porosity are added to the waste products. The mixture of the ground waste products and additives is then fired up to a temperature of 1200 °C.

EP 0684054 discloses a method and apparatus for melting asbestos or asbestos containing material in which asbestos and/or asbestos containing material is treated by reducing the particle size of the material to less than 50 mm, blending the material with fuel with particle size less than 50 mm and feeding the mixture into a melting furnace.

It is an object of the present invention to provide a method for treating asbestos containing materials that is simple to use and little expensive.

The object of the invention is achieved by a method according to independent claim 1.

Thanks to the method according to the invention asbestos containing materials may be treated in a simple an economic way, without the need of subjecting the material to grinding and without using additives for promoting the transformation of absestos contained in the material.

The packs of cement-asbestos contain from 50 to 70 slates of common roofing commercial typologies in terms of shape, size and composition. The packs of cement-asbestos slates are the results of the common abatement procedures and would alternatively be dismissed in controlled dump sites, licensed to the storage of asbestos. The direct and complete temperature induced transformation, via decomposition and recrystallization, of packages of plastic material containing the cement-asbestos slates or other asbestos containing wastes such as friable asbestos, is accomplished using an industrial continuous tunnel kiln, technologically comparable to those utilized for the production of bricks, with a length not shorter than 50 m and preferably around 125-135 m.

The multistep firing cycle required to accomplish the total decomposition and recrystallization of both the hazardous serpentine and amphibole species of asbestos into non hazardous Ca-, Mg-, Fe- Al-rich silicates such as akermanite, larnite, merwinite, ferrite, inside each piece of the asbestos containing materials is:
Step 1: a heating non-isothermal run up to the maximum firing temperature of 1200-1300 °C not shorter than 8 h;
Step 2: an isotherm at the maximum firing temperature of 1200-1300 °C not shorter than 12 h;
Step 3: a cooling non-isothermal run down to room temperature (25 °C) not shorter than 6 h.

The energy to the kiln will be supplied using natural gas. During the firing cycle, the shell of the kiln will guarantee a complete isolation of the packages from the environment outside the kiln.

All the volatile compounds produced during the following temperature induced chemical reactions:
- dehydration and dehydroxylation of the mineral phases (such as gypsum, portlandite, clay minerals) of the cement-asbestos slates or asbestos containing materials in the range 25-400 °C,
- combustion of the organic natural and synthetic phases (such as polyethylene, polypropylene, cellulose) which compose the package wrapping up the inorganic asbestos containing materials in the range 25-400 °C,
- dehydroxylation and decomposition of the mineral phases (such as chrysotile, calcite) of the cement-asbestos slates or asbestos containing materials in the range 400-1100 °C, and eventually the asbestos fibres released during the preliminary stage (Step 1) of the firing process,
will be conveyed to a post-combustion system. The latter is a supplementary heater, positioned at the top of the kiln, which operates at temperature not lower than 1100 °C. The smokes and particulate treated inside the post-combustion system will be slowly cooled down to about 150 °C before their passage throughout double absolute HEPA filters, and subsequent release in air.

The same industrial process can be utilized for the temperature induced transformation of friable synthetic fibre materials (glass/rock wool) and the following asbestos containing materials:
- Friable asbestos
- Asbestos insulation materials
- Asbestos fireproofing/Acoustical Texture Products
- Asbestos textile and cloth products
- Asbestos spackling, patching and taping compounds
- Asbestos gaskets and packing
- Asbestos tiles, wallboard, siding and roofing
- Asbestos friction Materials
- Various asbestos house objects

An industrial process may include the following steps:
1) Admission and temporary storage of the asbestos containing waste packages
2) Check of the status and storage of the asbestos containing waste packages to be conveyed to the kiln using the same precautions observed at the dump sites. The following items are required:
   - Conveyer belts
   - Belt elevator
3) Thermal treatment using an industrial continuous tunnel kiln supplied with natural gas, with a post-combustion element
4) Temporary storage of the transformed product from the firing process
5) Crushing and milling of the transformed product to be successively stored in tanks ready to be transported. To this aim, the following items are required:
   - Conveyer belts
   - Storage tank for the transformed material
   - Crusher
   - Storage tank for the ground transformed material
   - System for dust control and clearing
   - Protection building which is isolated from the temporary storage and crushing areas

The harmless product formed after thermal treatment of cement-asbestos can be completely recycled as raw material in various products manufactured at industrial scale.

The thermal process described here is highly innovative as the asbestos containing materials are directly treated in the temperature range 1200-1300 °C in a tunnel kiln without prior manual and/or automated operation of milling and/or grinding. The process is safe for the environment as the asbestos containing material is not handled until after the thermal treatment, when the material is recrystallized and innocuous. In addition, the productivity is much higher compared to other processes existing in Europe, as the thermal treatment is performed in a continuous mode directly on sealed packs of cement-asbestos slates.

As there already exist granted European patents for transformation of asbestos and asbestos-containing materials, it is important to emphasize the following aspects of the present invention:
- The process described here involves thermal transformation of sealed packs containing a large number (50-70) of cement-asbestos slates. No mechanical milling and/or grinding of the as-received asbestos containing material is performed, opposed to other conceived processes;
- The process described here does not concern consolidation with mechanical compactors of the product after the transformation of asbestos or asbestos containing material;
- The process described here is not based on a mixed thermo-chemical or hydro-thermo-chemical treatment;
- The process described here does not include transformation of asbestos or asbestos containing material which has been previously ground together with other raw materials (such as kaolins) or industrial wastes raw materials to produce ceramic or refractory materials;
- The process described here does not include the use of special equipment such as a photovoltaic arc.

## Claims

1. An industrial process for a direct and complete temperature induced transformation, via decomposition and recrystallization, of asbestos containing wastes, comprising the following steps:
- admission and temporary storage of asbestos containing wastes packages sealed with plastic material containing from 50 to 70 of roofing cement-asbestos slates or other asbestos containing wastes;
- submitting said asbestos containing wastes packed into said sealed packages to a continuous firing cycle without any modification of said sealed packages before the firing cycle,
wherein said continuous firing cycle is a multi-step firing cycle comprising submitting said asbestos containing wastes to a non-isothermal heating up not shorter than 8h to a maximum temperature of 1200-1300 °C, keeping said asbestos containing wastes to said maximum temperature for a time not shorter than 12h and submitting said asbestos containing wastes to a non-isothermal cooling up to room temperature not shorter than 6h; said firing cycle being accomplished in an industrial continuous tunnel kiln technologically comparable to those utilized for the production of bricks having a length not shorter than 50 m.

2. A process according to claim 1, wherein said continuous tunnel kiln comprises a post-combustion system having an operating temperature range of 1100-1300 °C, for thermally treating volatile compounds and asbestos fibres released during the said firing cycle.

3. A process according to claim 1, wherein said asbestos-containing wastes are transformed into a material consisting of non-fibrous crystalline Ca-, Mg-rich silicates with Fe and A) impurities, wherein said material is ground and recycled for use as a raw material for the formulation of a number of different industrial products such as ceramic pigments, bricks, and plastic materials.

## Patentansprüche

1. Industrielles Verfahren zur direkten und vollständigen temperaturinduzierten Transformation von asbestenthaltenden Abfällen über Dekomposition und Rekristallisation, das die folgenden Schritte aufweist:
- Bereitstellung und temporäre Lagerung von asbestenthaltenden Müllverpackungen, die mit Kunststoffmaterial verschlossen sind und 50 - 70 Zement-Asbest-Dachschiefer oder andere asbestenthaltenden Abfälle enthalten;
- Aussetzen der asbestenthaltenden Abfälle, die in den verschlossenen Verpackungen verpackt sind, einem kontinuierlichen Brennzyklus, der nicht kürzer ist als 8 Stunden, ohne dass die verschlossenen Verpackungen vor dem Brennzyklus auf irgendeine Art und Weise modifiziert werden,
wobei der kontinuierliche Brennzyklus ein mehrstufiger Brennzyklus ist, der folgendes umfasst, nämlich das Aussetzen der asbestenthaltenden Abfälle einem nicht-isothermalen Aufheizen auf eine Maximaltemperatur von 1200 - 1300 °C, das nicht kürzer ist als 8 Stunden, das Halten der asbestenthaltenden Abfälle auf der Maximaltemperatur für eine Zeit, die nicht kürzer ist als 12 Stunden, und das Aussetzen der asbestenthaltenden Abfälle einem nicht-isothermalen Abkühlen auf Raumtemperatur, das nicht kürzer ist als 6 Stunden, wobei der Brennzyklus in einem industriellen kontinuierlichen Tunnelofen bewerkstelligt wird, der technologisch vergleichbar ist mit jenen, die für die Herstellung von Ziegeln verwendet werden und eine Länge von nicht kürzer als 50 m aufweisen.

2. Verfahren gemäß Anspruch 1, wobei der kontinuierliche Tunnelofen ein Nachverbrennungssystem aufweist, das einen Arbeitstemperaturbereich von 1100-1300 °C aufweist, um flüchtige Verbindungen und Asbestfasern, die während des Brennzyklus freigesetzt werden, mit Wärme zu behandeln.

3. Verfahren gemäß Anspruch 1, wobei die asbestenthaltenden Abfälle in ein Material transformiert werden, das aus nicht-fasrigen kristallinen Ca-, Mgreichen Silikaten mit Fe- und Al-Unreinheiten bestehen, wobei das Material gemahlen und recycelt wird, um als Rohmaterial für die Formulierung einer Vielzahl von unterschiedlichen industriellen Produkten verwendet zu werden, wie beispielsweise keramischen Pigmenten, Ziegeln und Kunststoffmaterialien.

## Revendications

1. Procédé industriel pour une transformation induite par température directe et complète, par décomposition et recristallisation, de déchets amiantifères, comprenant les étapes suivantes :
- réception et stockage temporaire de colis de déchets amiantifères fermés hermétiquement en matière plastique contenant de 50 à 70 tuiles de toiture en ciment-amiante ou d'autres déchets amiantifères ;
- soumission desdits déchets amiantifères emballés dans lesdits colis fermés hermétiquement à un cycle de cuisson continu sans aucune modification desdits colis fermés hermétiquement avant le cycle de cuisson,
dans lequel ledit cycle de cuisson continu est un cycle de cuisson à plusieurs étapes consistant à soumettre lesdits déchets amiantifères à une montée en température non isotherme qui n'est pas inférieure à 8h jusqu'à une température maximale de 1200-1300 °C, maintenir lesdits déchets amiantifères à ladite température maximale pendant une durée qui n'est pas inférieure à 12h et soumettre lesdits déchets amiantifères à un refroidissement non isotherme jusqu'à la température ambiante qui n'est pas inférieur à 6h ; ledit cycle de cuisson étant réalisé dans un four tunnel continu industriel technologiquement comparable à ceux utilisés pour la production de briques ayant une longueur qui n'est pas inférieur à 50 m.

2. Procédé selon la revendication 1, dans lequel ledit four tunnel continu comprend un système de post-combustion ayant une plage de température de fonctionnement de 1100-1300 °C, pour traiter thermiquement les composés volatils et les fibres d'amiante libérés pendant ledit cycle de cuisson.

3. Procédé selon la revendication 1, dans lequel lesdits déchets amiantifères sont transformés en un matériau composé de silicates non fibreux cristallins riches en Ca et Mg avec des impuretés de Fe et Al, dans lequel ledit matériau est broyé et recyclé pour être utilisé comme matière première pour la formulation d'un certain nombre de produits industriels différents tels que les pigments céramiques, les briques, et les matériaux plastiques.
